# EUROPÄISCHE PATENTSCHRIFT

(11) **EP 3 053 050 B1**
(45) Veröffentlichungstag und Bekanntmachung des Hinweises auf die Patenterteilung: **14.11.2018**
(21) Anmeldenummer: 14776849.3
(22) Anmeldetag: 25.09.2014
(51) Int. Cl.: G06F 13/42

(54) **KOMMUNIKATIONSSYSTEM ZUR INTER-CHIP-KOMMUNIKATION**
COMMUNICATION SYSTEM FOR INTER-CHIP COMMUNICATION
SYSTÈME DE COMMUNICATION POUR LA COMMUNICATION ENTRE PUCES

(30) Priorität: 02.10.2013 DE 102013220077
(43) Veröffentlichungstag der Anmeldung: 10.08.2016
(73) Patentinhaber: Continental Automotive GmbH, 30165 Hannover (DE)
(72) Erfinder: HILDEBRAND, Torsten, 35423 Lich (DE); THIELE, Jörn, 35390 Giessen (DE); SCHEUERMANN, Jörg, 35606 Solms (DE)
(86) Internationale Anmeldenummer: PCT/EP2014/070498
(87) Internationale Veröffentlichungsnummer: WO 2015/049158

(56) Entgegenhaltungen:
- GB-A- 2 407 662
- US-A- 5 737 633
- US-A1- 2006 143 348
- US-A1- 2009 248 932
- US-A1- 2013 195 210

## Beschreibung

Die Erfindung betrifft ein Kommunikationssystem zur Inter-Chip-Kommunikation, bei der Prozessoren über Datenkanäle eines Kommunikationsbusses miteinander kommunizieren, wobei ein als Master-Prozessor bezeichneter Prozessor die Übertragungssteuerung mit dem anderen, als Slave-Prozessor bezeichneten Prozessor übernimmt.

In diesem Zusammenhang ist bereits ein Bus-System zur synchronen seriellen Datenübertragung nach dem Master-Slave-Prinzip bekannt, das auch Serial-Peripheral-Interface (kurz SPI) genannt wird. Dieses Bus-System weist drei gemeinsame Leitungen auf, an die jeder Teilnehmer angeschlossen ist. Diese Leitungen sind ein Ausgang für serielle Daten, ein Eingang für serielle Daten und eine Zeitsteuerung (clock) die von dem die Kommunikation steuernden Master definiert wird. Ferner ist eine Transmit-Enable-Leitung zwischen dem die Kommunikation steuernden Master und dem Slave vorgesehen. Die Kommunikation zwischen Master und Slave findet bidirektional statt und ist je nach Implementierung des Protokolls voll duplexfähig. Dies erfordert viele Einstellungen zwischen Master und Slave. Entsprechend sind die Datenprotokolle, die den Datenfluss und die Datenanalyse auf beiden Seiten der Kommunikationspartner ermöglichen, aufgrund der bidirektionalen Datenübertragung sehr komplex. Die bidirektionale Datenübertragung kann auch zu einer hohen Systembelastung führen, insbesondere weil Master und Slave in der Lage sind und sein müssen, Daten parallel zu senden, zu empfangen und zu bearbeiten.

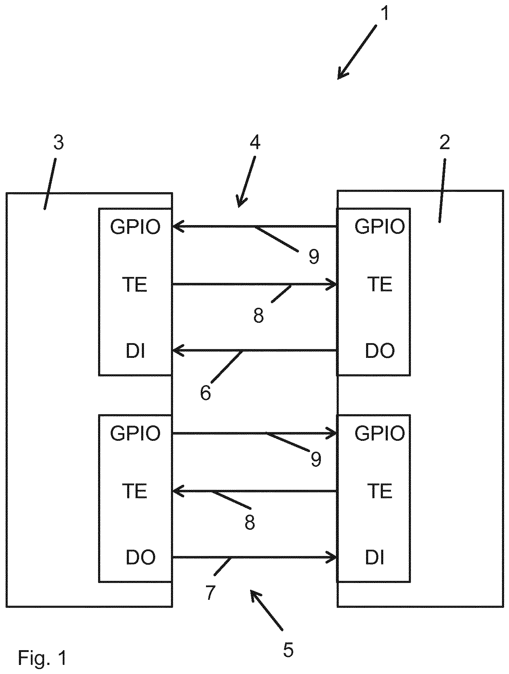

US 2013 / 0195210 A1 (D1) betrifft ein System mit zwei ICs, siehe Fig. 1 der D1, welche bidirektional über zwei separate physikalische Kanäle (105 bzw. 105') verbunden sind. Jeder IC weist einen Sender (110 bzw. 110') und einen Empfänger (150 bzw. 150') auf. Auf jeden der physikalischen Kanäle werden zwei logische Kanäle abgebildet, einen breitbandigen Kanal und einen Kanal mit geringer Latenz. Auf den Kanälen erfolgt eine Datenübertragung in Paketen. Läuft der Empfangspuffer des Empfängers (150) des zweiten ICs mit Daten, welche über den ersten physikalischen Kanal (105) übertragen werden voll, so initiiert dieser den Versand einer Nachricht an den Empfänger des ersten ICs über den zweiten physikalischen Kanal (105'), der eine Interrupt-Service Routine beim Sender (110) des ersten ICs auslöst, so dass dieser für einen vorbestimmten Zeitraum keine breitbandigen Daten an den Empfänger des zweiten ICs überträgt, siehe Par. 55 der D1.

Ein erhebliches Problem dieses SPI-Busses besteht darin, dass der Beginn einer Mitteilung in dem Datenfluss nicht bekannt ist und grundsätzlich mit jedem Datenbit starten kann.

Aufgrund der komplexen Protokollstruktur und der hardwarenahen Implementierung der Kommunikation werden für viele Prozessoren häufig proprietäre Kommunikationslösungen eingesetzt, die eine Interoperabilität verschiedener Kommunikationspartner, die aus einer unterschiedlichen Hardware bestehen, nahezu unmöglich machen. Die Implementierung des SPI-Busses hängt also immer von den beteiligten Prozessoren ab.

Problem bei der SPI-Inter-Chip-Kommunikation ist also, dass sowohl der den Kommunikationsablauf steuernde SPI-Master als auch der SPI-Slave die Daten parallel senden, empfangen und verarbeiten können muss. Dies ist vor allem für den SPI-Slave ein Problem, da dieser immer empfangsbereit sein muss, weil die Datenübertragung durch den SPI-Master grundsätzlich jederzeit, d. h. mit jedem Bit, starten kann. Auch bei einer Datenübertragung durch den SPI-Slave wird die Übertragungsablauf durch den SPI-Master gesteuert. Dies hat zur Folge, dass der SPI-Slave einen kontinuierlichen Datenfluss in seinem (durch den SPI-Master gesteuerten) Daten-Senderegister garantieren muss, solange die Datenübertragung von dem SPI-Slave zu dem SPI-Master stattfindet. Die dafür notwendigen Protokolle sind komplex und führen zu einer hohen Systembelastung des Busses für die Inter-Chip-Kommunikation.

Außerdem ist die Implementation des bekannten SPI-Busses für die Inter-Chip-Kommunikation stark systemabhängig, weil es viele Einstellmöglichkeiten für den SPI-Bus gibt. Dies liegt daran, dass die Spezifikationen für einen SPI-Bus nicht genau festgelegt sind und deshalb viele verschiedene, untereinander auch inkompatible Geräte existieren. So kann es vorkommen, dass für jeden angeschlossenen Schaltkreis eine eigene Konfiguration des SPI-Masters notwendig ist. Dies liegt beispielsweise auch daran, dass es keine einheitliche Steuerung für die Kommunikationsrichtung oder die Kommunikation unterschiedlicher Teilnehmer gibt. Wenn mehrere Teilnehmer auf einem Datenkanal gleichzeitig kommunizieren, kommt es häufig zu Kollisionen.

Aufgabe der vorliegenden Erfindungsmeldung ist es, die hohe Systembelastung bei der Inter-Chip-Kommunikation zu verringern und die komplexen, verschiedenen SPI-Bus-Protokolle zu vermeiden.

Diese Aufgabe wird erfindungsgemäß mit den Merkmalen des Anspruchs 1 gelöst.

Dazu ist bei einem Kommunikationssystem der eingangs genannten Art insbesondere vorgesehen, dass für jede Datenkommunikationsrichtung, d. h. die Datenübertragung von einem ersten zu einem zweiten Prozessor und die Datenübertragung von dem zweiten zu dem ersten Prozessor, ein Datenkanal in jeweils einem separaten physikalischen Kommunikationsbus betrieben wird. Dies führt zu einer logischen Trennung der beiden Datenkanäle für die unterschiedlichen Kommunikationsrichtungen, die somit logisch unabhängig voneinander arbeiten können. Dies wird technisch auf einfachste Weise dadurch erreicht, dass die beiden Datenkanäle auf zwei verschiedenen Kommunikationsbussen betrieben werden, die vorzugsweise jeweils gleich aufgebaut sind, so dass die Implementierung der beiden verschiedenen Datenbusse (mindestens einer für jede Datenkommunikationsrichtung) auf jedem Prozessor grundsätzlich gleich ist.

Die erfindungsgemäß vorgeschlagene Lösung ermöglicht beispielsweise eine Kommunikation in die eine Kommunikationsrichtung, wenn gleichzeitig Daten in der anderen Kommunikationsrichtung übertragen werden, ohne dass es zu einer Vermischung der Daten und damit einer die Kommunikation unterbindenden Kollision kommt, auch ohne dass ein aufwendiges, die bidirektionale Kommunikation steuerndes Datenprotokoll vorgesehen werden muss. Die Kommunikation in dem einen Datenkanal des Kommunikationsbusses kann einfach als unidirektionale, serielle Datenübertragung ausgebildet sein, weil jeder Kommunikationsbus einen definierten Sender und einen definierten Empfänger hat.

Im Gegensatz zu dem bekannten SPI-Bus, der eine bidirektionale Kommunikation vorsieht, ist die Kommunikation in dem erfindungsgemäßen Kommunikationsbus also unidirektional. Um eine bidirektionale Kommunikation zwischen den beiden Prozessoren zu ermöglichen, ist jeweils ein unidirektional betriebener Kommunikationsbus für jede Datenkommunikationsrichtung vorgesehen, wobei die jeweils unidirektional übertragenden Kommunikationsbusse unterschiedlicher Kommunikationsrichtung jeweils physikalisch separat voneinander betrieben werden. Damit sind Überschneidungen der unterschiedlichen Kommunikationsrichtungen von vornerein unterbunden. Aufgrund der einfachen seriellen Ausprägung der Datenkommunikation ist der Kommunikationsbus auch leicht austauschbar und erfordert lediglich geringe Anpassungen an den benutzten Plattformen (Hardware bzw. Prozessoren).

Gemäß einer besonders bevorzugten Ausführungsform ist vorgesehen, dass für jeden separaten Kommunikationsbus jeweils der Empfänger als die Kommunikation steuernder Master-Prozessor ausgebildet ist. Zur Steuerung der Kommunikation kann der Master-Prozessor erfindungsgemäß insbesondere ein Signal an einem Transmit-Enable-Eingang des Slave-Prozessors anlegen. Der Slave-Prozessor ist dann (d. h. bei Feststellen des Transmit-Enable-Signals) dazu eingerichtet, die in seinem Senderegister abgelegten Daten seriell auszusenden, bis das Signal an dem Transmit-Enable-Eingang des Slave-Prozessors nicht mehr anliegt. Das angelegte Signal kann beispielsweise ein 0-Bit oder ein 1-Bit sein. Somit kann der Empfänger den Sendeprozess und damit den Datenfluss steuern, und beispielsweise eine Übertragung anhalten, wenn der Empfänger aus welchen Gründen auch immer nicht empfangsbereit ist. Hierdurch kann der Empfänger-Prozessor einfacher aufgebaut sein, weil nicht beispielsweise über einen Zwischenspeicher sichergestellt sein muss, dass die Daten mit der Übertragungsrate des Senders zunächst einmal empfangen und gespeichert werden, bevor dann eine Weiterverarbeitung der Daten erfolgen kann. Wenn eine Weiterverarbeitung der Daten erfindungsgemäß nicht möglich ist, kann der Empfänger als Master-Prozessor die Übertragung also einfach anhalten.

Der Sender ist in dem unidirektional betriebenen Kommunikationsbus der einzige Kommunikationsteilnehmer, der beliebige zu übertragende Daten sendet. Dieser kann die Daten daher zu Mitteilungen, beispielsweise Datenpaketen, vorbereiten und dann in sein Senderegister einstellen, wenn die Daten vollständig zur Übertragung vorbereitet sind. Die Mitteilungen können beispielsweise Datenpakete sein, bei denen den Daten ein Header und/oder andere relevanten Daten für den Mitteilungsrahmen beigefügt werden. Diese Datenpakete können dann beispielsweise durch Einstellung in das Senderegister zur Übertragung vorbereitet werden.

Gemäß einer besonders bevorzugten Weiterbildung des vorgeschlagenen Verfahrens ist der Slave-Prozessor als Sender des Kommunikationsbusses vorzugsweise dazu eingerichtet, ein Trigger-Signal an den Master-Prozessor zu übermitteln, wenn durch den Slave-Prozessor Daten zur Übertragung anstehen. Dies kann vorzugsweise dann erfolgen, wenn die Daten durch den Sender vollständig zur Übertragung vorbereitet sind.

Dieses Trigger-Signal kann erfindungsgemäß an einem allgemeinen Ein- und Ausgabeeingang des Master-Prozessors anlegbar sein. Ein solcher allgemeiner Ein- und Ausgabeeingang, der auch als GPIO-Eingang (General Purpose Input Output) bezeichnet wird, ist üblicher Weise für eine einfache Kommunikationssteuerung an jedem Prozessor vorgesehen, so dass die vorgeschlagene, einfach durchführbare und insbesondere serielle Kommunikation nahezu hardwareunabhängig zwischen vielen verschiedenen Hardware-Prozessoren realisiert werden kann. Sobald der Master-Prozessor das Trigger-Signal erhält, kann der Master-Prozessor das Transmit-Enable-Signal an dem Eingang des Slave-Prozessors anlegen.

Im Rahmen eines einfachen, in vielen unterschiedlichen Hardware-Prozessoren nahezu universell implementierbaren Kommunikationsablaufs kann vorgesehen sein, dass der Master-Prozessor und der Slave-Prozessor dazu eingerichtet sind, den Kommunikationsablauf des erfindungsgemäß nur in eine Datenkommunikationsrichtung übertragenden Kommunikationsbusses mittels einer Unterbrechungsbehandlung zu steuern, bei der der jeweilige Prozessor, d. h. der Master- bzw. der Slave-Prozessor, dazu insbesondere eingerichtet sind, den normalen Programmablauf zu unterbrechen und einen insbesondere durch Software implementierten Prozess abzuarbeiten, wenn der Prozessor eine Unterbrechungsanforderung erhält. Derartige Unterbrechungsanforderungen werden auch als Interrupt bezeichnet. Die Unterbrechungsbehandlung ist als Interrupt-Service-Routine (ISR) bekannt.

Eine entsprechende Unterbrechungsbehandlung ist in den allermeisten Prozessoren standardmäßig vorgesehen und beispielsweise mittels Software konfigurierbar. So ist durch eine nur minimale hardwarebezogen Anpassung auf Prozessor- und/oder Betriebssystem-Ebene eine universelle Implementierung des erfindungsgemäß vorgeschlagenen Kommunikationssystems auf einfache Weise möglich.

Die Unterbrechungsbehandlung nimmt dem Kommunikationssystem auch eine hohe Arbeitslast, weil die Prozesse jeweils entsprechend der anfallenden Arbeit gesteuert werden können, ohne dass einzelne Hardwarekomponenten dazu ausgebildet sein müssen, durch andere Hardwarekomponenten aufgezwungene Kommunikationsabläufe gerade auch zeitlich und/oder vom Datenvolumen her zu erfüllen. Hierdurch können die an dem Kommunikationssystem teilnehmenden Prozessoren auch günstiger ausgebildet sein.

Aufgrund des Kommunikationsablaufs auf einer allgemeineren Ebene ist es so auf einfache Weise möglich, verschiedene Hardware-Bussysteme zur Kommunikation zu nutzen, ohne dass jeweils eigenständige Protokolle implementiert werden müssen. Dies führt dazu, dass der für die jeweilige Hardware zu implementierende Code weitestgehend hardwareunabhängig ist und auf vielen Plattformen in gleicher Weise oder mit minimalen Anpassungen verwendet werden kann. Nur die jeweiligen operations- bzw. funktionsspezifischen und die hardwareabhängigen Teile der Software müssen für jeden Prozessor bei der Implementierung angepasst werden, wobei es aufgrund der Universalität des Kommunikationsablaufs so ist, dass bestehende Software für andere Prozessoren oder Betriebssysteme bereits als Entwurf verwendet werden kann.

Die einfache Struktur führt auch dazu, dass die größten Teile der Software in gleicher Weise auf den verschiedenen Plattformen verwendet werden können, so dass die Überprüfungstiefe deutlich erhöht wird und der Prüfaufwand für die auf unterschiedlichen Plattformen installierten Kommunikationssysteme deutlich geringer ausfällt.

Um eine Kontrolle über die Kommunikation zu erhalten, kann vorgesehen sein, dass der Slave-Prozessor dazu eingerichtet ist, nach der Übertragung der Daten eine Bestätigungsnachricht von dem Master-Prozessor zu erhalten, wenn dieser die Daten empfangen hat. Sofern eine solche Bestätigungsnachricht, die allgemein auch als Acknowledgement bezeichnet wird, ausbleibt, kann der Slave-Prozessor dazu eingerichtet sein, die Daten erneut zu versenden, insbesondere bis das Acknowledgement vorliegt oder - sofern dies vorgesehen ist - eine bestimmte Anzahl an Fehl-Übertragungsversuchen überschritten ist. In letzterem Fall kann die Übertragung abgebrochen werden, um das Kommunikationssystem nicht über Gebühr zu belasten.

Erfindungsgemäß kann die Bestätigungsnachricht entgegen der eigentlichen Datenkommunikationsrichtung in dem Kommunikationsbus von dem Master-Prozessor zu dem Slave-Prozessor, d. h. von dem Empfänger der Daten zu dem Sender der Daten, übertragen werden. Dies ist auch ohne aufwendiges Datenprotokoll einfach zu implementieren, da der Sendezeitpunkt der Bestätigungsnachricht immer im Anschluss an die Datenübertragung stattfindet und für die Bestätigungsnachricht somit in dem Datenkanal ein festes Zeitfenster im Anschluss an jede Datenübertragung reserviert werden kann. Dieses Vorgehen ist vorteilhaft, da für das Acknowledgement derselbe Datenkanal verwendet wird wie für die eigentliche Datenübertragung.

Alternativ wäre es jedoch auch denkbar, dass die Bestätigungsnachricht über den Kommunikationsbus für die andere Kommunikationsdatenrichtung übertragen wird. Dies hat den Vorteil, dass die Hardware bzw. Plattformen noch universeller einsetzbar sind, da keine Gegenkommunikationsrichtung auf dem einen Übertragungskanal, auch nicht mit sehr definierten Übertragungsbedingungen, vorgehalten werden muss.

Weitere Vorteile, Merkmale und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Die einzige Fig. 1 zeigt ein erfindungsgemäßes Kommunikationssystem 1 zwischen zwei Prozessoren 2, 3.

Das Kommunikationssystem 1 zwischen den zwei Prozessoren 2, 3 weist einen ersten Kommunikationsbus 4 und einen zweiten Kommunikationsbus 5 auf. Der erste Kommunikationsbus 4 ist für die Datenübertragung von dem auch als ersten Prozessor bezeichneten Prozessor bzw. Chip 2 zu dem auch als zweiten Prozessor bezeichneten Prozessor bzw. Chip 3 eingerichtet. Der zweite Kommunikationsbus 5 dient der Datenübertragung von dem zweiten Prozessor 3 zu dem ersten Prozessor 2.

Die Kommunikationsbusse 4, 5, von denen jeder für eine Datenkommunikationsrichtung verwendet wird, sind jeweils physikalisch voneinander getrennt bzw. separat ausgebildet, so dass der erste Kommunikationsbus 4 einen Datenkanal 6 von dem ersten Prozessor 2 zu dem zweiten Prozessor 3 und der zweite Kommunikationsbus 5 einen Datenkanal 7 von dem zweiten Prozessor 3 zu dem ersten Prozessor 2 aufweist. Mittels beider Kommunikationsbusse 4, 5 kann zwischen den Prozessoren 2, 3 also eine bidirektionale Kommunikation stattfinden, wobei jeder Kommunikationsbus 4, 5 losgelöst von dem anderen Kommunikationsbus 5, 4 beispielsweise mittels einer seriellen Datenübertragung betrieben werden kann. Der Datenkanal 6, 7 ist jeweils zwischen einem Datenausgang DO und einem Dateneingang DI des jeweiligen Kommunikationsbusses 4, 5 ausgebildet.

Jeweils der empfangende Prozessor 3, 2, d. h. der zweite Prozessor 3 für den ersten Kommunikationsbus 4 und der erste Prozessor 2 für den zweiten Kommunikationsbus 5, sind als die Kommunikation steuernder Master-Prozessor ausgebildet. Der Master-Prozessor steuert die Kommunikation, indem der Empfänger (Master-Prozessor) an den Sender (Slave-Prozessor) ein Transmit-Enable-Signal 8 an dem Transmit-Enable-Eingang TE des Slave-Prozessors anlegt. Dieses wird an dem Transmit-Enable-Ausgang TE des Master-Prozessors erzeugt. Die Signalrichtung des Transmit-Enable-Signals 8 ist also der Datenkommunikationsrichtung des Datenkanals 6, 7 gerade entgegengerichtet. Sobald das Transmit-Enable-Signal 8 an dem Transmit-Enable-Eingang TE des Slave-Prozessors anliegt, beginnt dieser die in einem nicht dargestellten Sendespeicher gespeicherten Daten über den Datenkanal 6, 7 seriell an den Master-Prozessor zu übermitteln. Dieser empfängt die Daten und verarbeitet sie weiter. Sollte beispielsweise der Empfangsspeicher des Master-Prozessors voll sein, kann dieser das Transmit-Enable-Signal 8 unterbrechen und damit die Aussendung der Daten durch den Slave-Prozessor anhalten, bis wieder genug Speicherkapazität in dem Empfangsspeicher des Master-Prozessors vorhanden ist. Dann wird das Transmit-Enable-Signal 8 wieder aktiviert und der Slave-Prozessor nimmt die Datenübertragung wieder auf.

Um dem Master-Prozessor anzuzeigen, dass zu übertragende Daten vorliegen, ist der Slave-Prozessor als Sender des Kommunikationsbusses 4, 5 dazu eingerichtet, ein Trigger-Signal 9 an den Master-Prozessor zu übermitteln. Dieser wird nach Erhalt des Trigger-Signals 9 das Transmit-Enable-Signal 8 an dem Transmit-Enable-Eingang TE des Slave-Prozessors anlegen und diesem damit die Übertragung von Daten in Datenkommunikationsrichtung über dem Datenkanal 6, 7 zu ermöglichen.

Das Trigger-Signal 9 wird jeweils zwischen allgemeinen Ein- und Ausgabeeingängen GPIO der Prozessoren 2, 3 erzeugt, die auch als GPIO-Ein- bzw. Ausgang (General Purpose Input Output) bezeichnet werden. Entsprechende TE- bzw. GPIO-Eingänge/Ausgänge stehen üblicher Weise als durch Software konfigurierbare Ein- und Ausgänge von Prozessoren 2, 3 zur Verfügung, so dass der Kommunikationsablauf des erfindungsgemäß vorgeschlagenen Kommunikationssystems 1 nahezu hardwareunabhängig in gleicher Weise konfiguriert werden kann und lediglich die Belegung der Prozessor-Pins (TE, GPIO) entsprechend konfiguriert werden muss.

Damit ist das erfindungsgemäß vorgeschlagene Kommunikationssystem 1 leicht auf verschiedenen Prozessoren 2, 3, d. h. unterschiedlicher Hardware, zu realisieren, ohne dass das gesamte Kommunikationsprotokoll hardwarenah implementiert werden muss.

Die physikalische Trennung der Datenkanäle 6, 7 für die beiden Datenkommunikationsrichtungen der Kommunikationsbusse 4, 5 zwischen den beiden Prozessoren 2, 3 hat zur Folge, dass die beiden Datenübertragungsrichtungen jeweils seriell, beispielsweise im Sinne einer First in/First out (FIFO) oder Last in/First out (LIFO)-Übertragung oder dergleichen, realisiert werden kann, ohne dass ein duplexfähiges Übertragungsprotokoll realisiert werden muss. Dies ermöglicht auch eine einfache Kommunikationssteuerung durch den Empfänger, so dass eine hohe bzw. zu hohe Arbeitslast der einzelnen Prozessoren 2, 3 in der Kommunikationssteuerung leicht vermieden werden kann, weil der arbeitslast-anfälligere Empfänger-Prozessor jeweils als Master-Prozessor des jeweiligen Kommunikationsbusses 4, 5 ausgebildet ist, der die Kommunikation über die Datenkanäle 6, 7 entsprechend seiner Kapazität frei steuern kann.

Damit wird eine hohe Systembelastung bei der Inter-Chip-Kommunikation verringert bzw. vermieden. Komplexe und hardwarenah zu implementierende Kommunikationsprotokolle, die für die verschiedenen SPI-Systeme notwendig sind, werden durch einen einfach auf verschiedenen Plattformen zu installierenden Kommunikationsablauf ersetzt, der nur wenige hardwarenahe Implementierungen, insbesondere die Pin-Belegungen der allgemeinen GPIO- und TE-Eingänge/Ausgänge erfordert.

Damit trägt das erfindungsgemäß vorgeschlagene Kommunikationssystem dazu bei, die Inter-Chip-Kommunikation beispielsweise die Weiterleitung von Sensordaten oder Lebenszeichen der einzelnen Prozessoren auch in komplexen Systemen wie beispielsweise Automobilen zu verbessern und geringere Hardwareanforderungen zu stellen, beispielsweise also kostengünstigere Prozessoren vorsehen zu können.

## Patentansprüche

1. Kommunikationssystem zur Inter-Chip-Kommunikation, bei der ein erster Prozessor (2) und ein zweiter Prozessor (3) über Datenkanäle (6, 7) eines Kommunikationsbusses (4, 5) miteinander kommunizieren, wobei für jede Kommunikationsrichtung ein Datenkanal (6,7) in jeweils einem separaten physikalischen Kommunikationsbus (4,5) betrieben wird, wobei der erste Prozessor (2) eingerichtet ist, über einen ersten Kommunikationsbus (4) Daten an den zweiten Prozessor (3)zu senden und über einen zweiten Kommunikationsbus (5) Daten von dem zweiten Prozessor (3) zu empfangen und wobei der zweite Prozessor eingerichtet ist, über den ersten Kommunikationsbus (4) Daten von dem ersten Prozessor (3) zu empfangen und Daten über den zweiten Kommunikationsbus (5) an den ersten Prozessor (2) zu senden; **dadurch gekennzeichnet dass** für jeden separaten Kommunikationsbus (4,5) der jeweils empfangende als Master-Prozessor bezeichnete Prozessor (2, 3) die Übertragungssteuerung mit dem anderen sendenden als Slave-Prozessor bezeichneten Prozessor (3, 2) durch Anlegen eines Transmit-Enable-Signals an einen Transmit-Enable-Eingang des Slave-Prozessors steuert und wobei der Slave-Prozessor dazu eingerichtet ist, die in seinem Senderegister abgelegten Daten seriell zu senden, bis das Transmit-Enable-Signal an dem Transmit-Enable-Eingang des Slave-Prozessors nicht mehr anliegt; wobei der Slave-Prozessor als Sender des Kommunikationsbusses (4, 5) dazu eingerichtet ist, ein Trigger-Signal (9) an den Master-Prozessor zu übermitteln, wenn durch den Slave-Prozessor Daten zur Übertragung anstehen; und wobei der Master-Prozessor das Transmit-Enable-Signal an den Transmit-Enable-Eingang des Slave-Prozessors anlegt, sobald der Master-Prozessor das Trigger-Signal erhält.

2. Kommunikationssystem nach Anspruch 1, **dadurch gekennzeichnet, dass** das Trigger-Signal (9) an einem allgemeinen Ein- und Ausgabeeingang (GPIO) des Master-Prozessors anlegbar ist.

3. Kommunikationssystem nach einem der vorhergehenden Ansprüche, **dadurch gekennzeichnet, dass** der Master-Prozessor und der Slave-Prozessor dazu eingerichtet sind, den Kommunikationsablauf des Kommunikationsbusses (4, 5) mittels einer Unterbrechungsbehandlung zu steuern.

4. Kommunikationssystem nach einem der vorhergehenden Ansprüche, **dadurch gekennzeichnet, dass** der Slave-Prozessor dazu eingerichtet ist, nach der Übertragung der Daten eine Bestätigungsnachricht von dem Master-Prozessor zu erhalten.

5. Kommunikationssystem nach Anspruch 4, **dadurch gekennzeichnet, dass** die Bestätigungsnachricht entgegen der eigentlichen Datenkommunikationsrichtung in dem Kommunikationsbus (4, 5) von dem Master-Prozessor zu dem Slave-Prozessor übertragen wird.

6. Kommunikationssystem nach Anspruch 4, **dadurch gekennzeichnet, dass** die Bestätigungsnachricht über den Kommunikationsbus (4, 5) für die andere Datenkommunikationsrichtung übertragen wird.

## Claims

1. Communication system for inter-chip communication in which a first processor (2) and a second processor (3) communicate with one another via data channels (6, 7) of a communication bus (4, 5), wherein a data channel (6, 7) is operated in each case in a separate physical communication bus (4, 5) for each communication direction, wherein the first processor (2) is configured to transmit data to the second processor (3) via a first communication bus (4) and to receive data from the second processor (3) via a second communication bus (5), and wherein the second processor is configured to receive data from the first processor (3) via the first communication bus (4) and to transmit data to the first processor (2) via the second communication bus (5); **characterized in that**, for each separate communication bus (4, 5), the respectively receiving processor (2, 3) referred to as the master processor controls the transmission with the other, transmitting processor (3, 2) referred to as the slave processor by applying a transmit enable signal to a transmit enable input of the slave processor, and wherein the slave processor is configured to serially transmit the data stored in its transmission register until the transmit enable signal is no longer applied to the transmit enable input of the slave processor; wherein the slave processor, as the transmitter of the communication bus (4, 5), is configured to transmit a trigger signal (9) to the master processor if data are pending transmission by the slave processor; and wherein the master processor applies the transmit enable signal to the transmit enable input of the slave processor as soon as the master processor receives the trigger signal.

2. Communication system according to Claim 1, **characterized in that** the trigger signal (9) can be applicable to a general input and output port (GPIO) of the master processor.

3. Communication system according to one of the preceding claims, **characterized in that** the master processor and the slave processor are configured to control the communication flow of the communication bus (4, 5) by means of an interrupt action.

4. Communication system according to one of the preceding claims, **characterized in that** the slave processor is configured to receive a confirmation message from the master processor following the transmission.

5. Communication system according to Claim 4, **characterized in that** the confirmation message is transmitted in the opposite direction to that of the actual data communication in the communication bus (4, 5) from the master processor to the slave processor.

6. Communication system according to Claim 4, **characterized in that** the confirmation message is transmitted via the communication bus (4, 5) for the other data communication direction.

## Revendications

1. Système de communication destiné à la communication inter-puce, dans lequel un premier processeur (2) et un deuxième processeur (3) communiquent entre eux par le biais de canaux de données (6, 7) d'un bus de communication (4, 5), un canal de données (6, 7) fonctionnant respectivement dans un bus de communication (4, 5) sépare physique pour chaque sens de communication, le premier processeur (2) étant conçu pour émettre des données au deuxième processeur (3) par le biais d'un premier bus de communication (4) et pour recevoir des données de la part du deuxième processeur (3) par le biais d'un deuxième bus de communication (5) et le deuxième processeur étant conçu pour recevoir des données de la part du premier processeur (3) par le biais du premier bus de communication (4) et pour émettre des données au premier processeur (2) par le biais du deuxième bus de communication (5) ;
**caractérisé en ce que**
pour chaque bus de communication (4, 5) séparé, le processeur (2, 3) récepteur respectif, désigné processeur maître, commande la commande de transmission avec l'autre processeur (3, 2) émetteur, désigné processeur esclave, en appliquant un signal Prêt à émettre à une entrée Prêt à émettre du processeur esclave et le processeur esclave étant conçu pour émettre en série les données stockées dans son registre d'émission jusqu'à ce que le signal Prêt à émettre ne soit plus appliqué à l'entrée Prêt à émettre du processeur esclave ;
le processeur esclave, en tant qu'émetteur du bus de communication (4, 5), étant conçu pour communiquer un signal de déclenchement (9) au processeur maître lorsque des données sont en attente de transmission par le processeur esclave ; et le processeur maître appliquant le signal Prêt à émettre à l'entrée Prêt à émettre du processeur esclave dès que le processeur maître reçoit le signal de déclenchement.

2. Système de communication selon la revendication 1, **caractérisé en ce que** le signal de déclenchement (9) peut être appliqué à une entrée d'entrée et de sortie à usage général (GPIO) du processeur maître.

3. Système de communication selon l'une des revendications précédentes, **caractérisé en ce que** le processeur maître et le processeur esclave sont conçus pour commander le déroulement de la communication du bus de communication (4, 5) au moyen d'un traitement d'interruption.

4. Système de communication selon l'une des revendications précédentes, **caractérisé en ce que** le processeur esclave est conçu pour obtenir un message de confirmation de la part du processeur maître après la transmission des données.

5. Système de communication selon la revendication 4, **caractérisé en ce que** le message de confirmation est transmis du processeur maître vers le processeur esclave en sens inverse de la direction de communication de données effective dans le bus de communication (4, 5).

6. Système de communication selon la revendication 4, **caractérisé en ce que** le message de confirmation est transmis par le biais du bus de communication (4, 5) pour l'autre direction de communication de données.
